Europäisches Patentamt

European Patent Office

Office européen des brevets

(11) Veröffentlichungsnummer: **0 472 195 A2**

# EUROPÄISCHE PATENTANMELDUNG

(21) Anmeldenummer: **91114079.6**

(22) Anmeldetag: **22.08.91**

(51) Int. Cl.5: **D03D 1/00, B65D 57/00, B29C 67/14**

(30) Priorität: **23.08.90 DE 4026671**

(43) Veröffentlichungstag der Anmeldung:
**26.02.92 Patentblatt 92/09**

(84) Benannte Vertragsstaaten:
**AT BE CH DE DK ES FR GB GR IT LI LU NL SE**

(71) Anmelder: **MILLIKEN EUROPE N.V.**
**24 Ham**
**B-9000 Gent(BE)**

(72) Erfinder: **De Meyer, Willy A.**
**A. Catriestraat 191**
**B-9031 Drongen(BE)**

(74) Vertreter: **Behrens, Dieter, Dr.-Ing.**
**Wuesthoff & Wuesthoff Patent- und**
**Rechtsanwälte Schweigerstrasse 2**
**W-8000 München 90(DE)**

(54) Textiles Mitläuferband für die Trennung von nicht-vulkanisierten Gummimischungensbändern und -produkten.

(57) Ein textiles Mitläuferband für die Trennung von nicht-vulkanisierten Gummimischungsbändern und -produkten oder Produkten aus Kunststoff besteht aus einem mit Polyethylen oder Polypropylen beschichteten bandförmigen Grundstoff (Gewebe, Gestrick, Gewirk, Vlies) aus Kunststoffasern, insbes. auch aus Polyethylen bzw. Polypropylen. Zur Verbesserung der Weichheit und des Griffs der Mitläuferbahn bei gleichen mechanischen Eigenschaften ist vorgesehen, daß die Grundbahn aus dieser Festigkeit verleihenden Fasern, insbes. Garnen einerseits und diesen Bindungsfähigkeit zur Beschichtung verleihenden Fasern oder Fäden andererseits besteht, wobei zur Sicherstellung einer guten Bindung diese Faser- oder Fadenkomponente aus im wesentlichen dem gleichen Werkstoff wie die Beschichtung besteht.

EP 0 472 195 A2

Die Erfindung betrifft ein textiles Mitläuferband für die Trennung von nicht-vulkanisierten Gummimischungsbändern und -produkten oder auch gewissen Kunststoffprodukten, die noch klebrig sind (green tack), wie sie in der Gummi- und Kunststoffolien-Industrie verwendet werden, wie sie aber auch als leichte Unterstützungsbänder, z.B. für Sperrfolien, Auskleidungsfolien, Zeltplanen, Schutz(kleidungs)folien, Einsatz finden.

Mitläuferbänder werden in großem Umfang in der Gummiindustrie angewandt, um insbes. nichtvulkanisierte Kautschukbänder aufwickeln und abwickeln zu können, weil sie im aufgewickelten Zustand für den Transport und bei der Weiterverarbeitung leichter handhabbar sind. Die einzelnen Lagen eines solchen Wickels würden aneinanderkleben und sich nicht einwandfrei trennen, wenn nicht Zwischenschichten, die keine Bindung zu den Lagen entfalten, eingesetzt würden.

Bekannte Mitläufergewebe sind aus gewirkten, gewebten, gevliesten oder dergl. Kunstfaserbändern hergestellt, die gegebenenfalls auf einer oder beiden Seiten mit einem verträglichen Kunststoff kaschiert oder laminiert sind. Die eingesetzten Kunstfasern sind vielfach Polyethylen, Polypropylen, Polyester, Aramid, Polyamid oder ähnliche Kunststoffe, während die Beschichtung im allgemeinen aus Polyethylen, Polypropylen oder Polyester aber auch aus PTFE, Polyurethan, Polyamid oder dergl. besteht. Eine hinreichend befriedigende Festigkeit des Grundbands (Gewirk, Gestrick, Gewebe, Vlies oder dergl.) und gegebenenfalls Verbindung zur Beschichtung machen es erforderlich, daß preiswürdige starke Fäden und gegebenenfalls bei hohen Temperaturen nicht zu dünne Kaschierungen vorgesehen werden. Dies wiederum macht das resultierende Band vergleichsweise steif. Natürlich hängt die Steifheit auch von der Dicke des Grundbands und gegebenenfalls der Beschichtung ab. Diese richtet sich nach den Anforderungen der Festigkeit. Dennoch besteht das Bedürfnis, bei gleichen Gebrauchseigenschaften das Mitläuferband relativ weicher auszubilden ohne es zu verteuern.

Der Erfindung liegt demgemäß die Aufgabe zugrunde, das eingangs genannte Mitläuferband dahingehend fortzuentwickeln, daß bei vorgegebener Festigkeit und Trennvermögen und Preiswürdigkeit die Weichheit des Mitläuferband erhöht und der "Griff" verbessert ist.

Zur Lösung dieser Aufgabe schlägt die Erfindung bei dem eingangs umrissenen textilen Mitläuferband vor, daß nur ein Teil der Fasern oder Fäden des Grund- oder Stützbands aus dem gleichen oder einem ähnlichen Kunststoff besteht, wie die Beschichtung. Im Grundband dient nur ein Teil der Fasern oder Fäden als Haftungsvermittler zur Beschichtung, während der andere Teil die erforderlichen physikalischen Eigenschaften, wie Festigkeit, Dehnbarkeit und dergl., preiswert gewährleistet.

Für die Sicherstellung einer ausreichenden Bindung zwischen der aufkaschierten oder aufgeschmolzenen Beschichtung und dem Grundband genügt es überraschenderweise, wenn nur ein Teil der Fasern des Grundbandes, insbes. nur ein - möglichst geringer - Teil der zu dessen Herstellung verwendeten Fäden, aus einem Kunststoff besteht, der sich gut mit der Beschichtung unter mäßigem Druck und niedriger Hitze verbinden läßt. Bisher waren erhebliche Drucke und Temperaturen zur Sicherstellung einer guten Bindung erforderlich, um bei ausreichend festen Fäden oder Fasern ein befriedigendes Produkt zu erzielen, auch dann, wenn Fäden und Beschichtung aus Polyethylen, Polyester oder Polypropylen bestehen, was zu vergleichsweise steifen Mitläuferbändern führte. Gemäß der Erfindung lassen sich hochfeste Fasern oder Fäden im Grundgewebe oder Band einsetzen, die sich weniger gut mit der Beschichtung verbinden. Zur Haftungsvermittlung dienen die Fäden oder Fasern, deren Werkstoff dem der Beschichtung gleicht. Die anderen, aus einem Kunststoff ausreichender Affinität zur Beschichtung bestehenden Fäden oder Fasern vermögen eine insgesamt ausreichend hohe Bindung zur Beschichtung auch bei mäßigen Temperaturen und Kaschierdruck herzustellen. Es resultiert hieraus ein in seinen Eigenschaften hinsichtlich Weichheit und Griff bei im übrigen unveränderten mechanischen Eigenschaften verbessertes preiswürdiges Mitläuferband.

Der Anteil der Fasern oder Fäden, deren Affinität zur Beschichtung gut ist, also im allgemeinen die gleiche Zusammensetzung hat, kann bis zu 80, gegebenenfalls nur bis zu 60, 40 oder gar nur 20 Gew.-% oder 3 % des Grundbandgesichts betragen.

Die Kaschierung von Kunststoffbändern, die neben Kunststofffäden oder -fasern aus isotaktischem Polypropylen auch Glasfasern zur Verstärkung aufweisen, ist an sich bekannt (US-PS 3 489 639). Derartige einseitig mit Polypropylen beschichtete Bänder eigenen sich jedoch nicht als Mitläuferbänder. Auch Transportbänder oder Planen aus Grundgeweben oder -stoffen aus Mischfasern oder unterschiedlichen Fäden sind vielfältig bekannt, doch sind bei diesen Weichheit und Griff neben antibindenden Eigenschaften bei vorgegebenen anderen mechanischen Eigenschaften nicht von Bedeutung. Alle diese Materialien eignen sich nicht als Mitläuferbänder.

Es ist vielfach erwünscht, daß die oder jede Oberfläche des Bandes einer besonderen Oberflächengestaltung des unvulkanisierten Gummigegenstandes komplementär entspricht. Die erfindungsgemäße Ausbildung des Mitläuferbandes sieht auch solche Ausgestaltungen vor, bei denen die Dicke in Richtung der Breite oder der Länge des Bandes unterschiedliche verteilt ist. So können die Randstreifen erhabener als der Mittelbereich sein oder kann in Längsrichtung eine periodische Wellung vorgesehen werden. Dies wird durch entsprechende Ausbildung der Dicke des Grundbandes und/oder der Beschichtung erreicht.

Das neue Mitläuferband besteht also nur zum - vorzugsweise geringen - Anteil aus Fäden, die die gleiche Zusammensetzung wie der Kunststoff der Beschichtung haben und die für eine gute Bindung zur Beschichtung sorgen. Andererseits wird die notwendige Festigkeit durch andere Fäden oder Fasern erzeugt, wie sie an sich für Mitläuferbänder weniger üblich sind, weil ihre Affinität zum noch unvulkanisierten Gummirohband zu hoch ist. Gewebte Bänder können gekreuzt gewebt oder gerade gewebt sein. Geeignete Materialien für die Festigkeit und die erforderliche Dehnung bewirkende Fäden sind Mischungen aus Aramiden, Baumwolle, Rayon, Polyamid, PVA, PVDF, PP, Polyester, PBI, Polyethylen, PTFE oder ähnliche Faser- bzw. Fadensysteme, die mit Beschichtungen aus Polypropylen, Polyethylen, Polyester, Polyamid, PTFE, Polyurethan und dergl. verstärkt sein können. Die Verwendung von Verstärkungsfasern bzw. -fäden aus Aramid, Polyamid, Polyester und dergl. verleihen dem Band die erforderliche Festigkeit, wie sie von einem Grundgewebe erwartet wird, während der andere Teil der Fäden oder Fasern, insbes. aus Polypropylen, Polyester oder Polyethylen, gegebenenfalls Polyurethan, für die ausreichende Bindung zur Beschichtung oder Kaschierschicht sorgen, so daß das Mitläuferband insgesamt die erforderliche Festigkeit, Biegsamkeit, Weichheit und den erwünschten Griff neben den weiteren üblicherweise geforderten physikalischen Eigenschaften und Preiswürdigkeit hat.

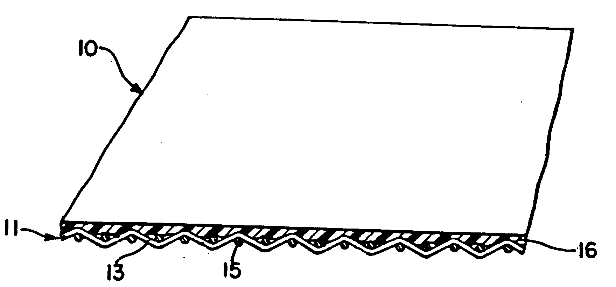

In der beigefügten Zeichnung ist in Schrägperspektive ein Ausschnitt eines erfindungsgemäßen Mitläuferbandes 10 dargestellt, dessen Grundgewebe 11 aus Schußfäden 13 und aus Kettfäden 15 besteht und das einseitig mit einer Beschichtung 16 versehen ist. Die Kettfäden bestehen aus zwei Komponenten, von denen die eine Fadenkomponente Polyethylen ist, aber auch Polypropylen sein kann, während die andere Fadenkomponente vorzugsweise aus Polyester, aber auch aus Polyamid, bestehen kann. Der Anteil des Polyethylens oder Polypropylens am Gesamtgewicht des Grundgewebes beträgt 12 bis 60, vorzugsweise 3 bis 40 Gew.-%. Der Anteil sollte nach Möglichkeit gering sein. Die Kettfäden sind ein- oder mehrfädig und bestehen aus einem anderen Werkstoff, ebenfalls vorzugsweise aus Polyethylen oder Polyamid. Das Verhältnis der Fadenmaterialien der beiden Komponenten zueinander könnte derart sein, daß 100 % aus dem Material der ersten Komponente bestehen, aber auch weniger, bis zu 20 %. Wenigstens ca. 2 bis 3 oder 5 Gew.-% sollte der Polyethylenanteil am Gesamtgewicht der Bahn betragen.

Die Beschichtung bzw. Kaschierung 16 besteht aus Polyethylen, Polypropylen oder einer Mischung daraus, die abgestimmt ist auf wesentliche haftvermittelnde Komponente der ersten Fadenkomponente. Die Werkstoffe sollen gleich sein, damit die notwendige Bindung zwischen der Grundbahn und der Beschichtung über diese bewirkt wird. Schuß- und Kettfäden können an sich beliebig wechseln, d.h. es muß nicht eine 1 : 1-Bindung vorgesehen sein, sondern es können auch jeweils ein oder zwei Fäden abwechseln oder jeweils Doppelfäden gelegt sein.

Bei einem ersten Ausführungsbeispiel bestand das Grundgewebe aus 167/2 dtex texturierten Polyester(PET)-Kettfäden (78 g/m$^2$) und 30Nm Schußfäden aus 50 % Polyester und 50 % Polyethylen, der mit einem texturierten Schußfaden 167/2dtex je Schuß (pick à pick) wechselte.

Bei einem zweitenen Ausführungsbeispiel wurden Kettfäden aus 167/2 dtex texturiertem Polyestergarn und 30Nm Schußfäden aus 75 % Polyester und 25 % Polyethylen verwendet.

Bei einem dritten Ausführungsbeispiel, das dem ersten ähnelt, wurden im Schuß abwechselnd 167/2 dtex Polyester-Fäden (25 g/m$^2$) und 30Nm PET/PE (50 % PTE und 50 % PE) /22 g/m$^2$) eingesetzt, so. daß der Polyethylenanteil am Gesamtgewicht 9 Gew.-% betrug.

Bei einem vierten Ausführungsbeispiel bestand gegenüber dem vorhergehenden Beispiel der Schuß nur aus 30Nm PET/PE (50 % PTE und 50 % PE) Garn (45 g/m$^2$) so daß der Polyethylenanteil am Gesamtgewicht 18 Gew.-% ausmachte.

Diese Grundgewebe wurden kaschiert oder heißbeschichtet mit einer Polyethylenmischung, die hohe Weichheit und guten Griff sicherstellte, wie er in der Gummi- oder Kunststoffindustrie für nichtausvulkanisierte oder ausgehärtete Gummi- oder Kunststoffprodukte erwünscht ist.

Die verwendeten Garne können gesponnen, texturiert, gewirkt, verwirbelt, ummantelt oder kerngesponnen sein.

**Patentansprüche**

1. Textiles Mitläuferband für die Trennung von nicht-vulkanisierten Gummimischungsbändern und -produkten aus einem mit Polyethylen bzw. Polypropylen u.ä. beschichtetem bandförmigen Grundstoff (Gewebe, Gestrick, Gewirk, Vlies) aus Kunststoffasern, insbes. auch aus Polyethylen bzw. Polypropylen, dadurch **gekennzeichnet,** daß nur ein Teil der Fasern oder Fäden der Grundbahn (11) aus dem gleichen Kunststoff wie die Beschichtung (16) besteht und die Haftung zur Beschichtung sicherstellt, während der andere Teil der Fasern oder Fäden die Festigkeit des Bandes bestimmt.

2. Mitläuferband nach Anspruch 1,
dadurch **gekennzeichnet,**
daß bei Verwendung eines Grundgewebes entweder die Kette oder der Schuß aus Zweikomponentengarnen oder zwei Garnen unterschiedlichen Materials besteht, von denen die eine Komponente aus gleichem Grundwerkstoff besteht wie die Beschichtung und die andere Komponente eine die Garnfestigkeit bestimmende andere Komponente, insbes. Polypropylen ist.

3. Mitläuferband nach Anspruch 1 oder 2,
dadurch **gekennzeichnet,**
daß bis zu 80 Gew.-% der Fasern oder Fäden des Grundstoffs (11) aus gleichem Kunststoff wie die Beschichtung (16) bestehen.

4. Mitläuferband nach Anspruch 1 oder 2,
dadurch **gekennzeichnet,**
daß bis zu 60 Gew.-% der Fasern oder Fäden des Grundstoffs (11) aus gleichem Kunststoff wie die Beschichtung (16) bestehen.

5. Mitläuferband nach Anspruch 1 oder 2,
dadurch **gekennzeichnet,**
daß bis zu 40 Gew.-% der Fasern oder Fäden des Grundstoffs (11) aus gleichem Kunststoff wie die Beschichtung (16) bestehen.

6. Mitläuferband nach Anspruch 1 oder 2,
dadurch **gekennzeichnet,**
daß bis zu 20 Gew.-% der Fasern oder Fäden des Grundstoffs (11) aus gleichem Kunststoff wie die Beschichtung (16) bestehen.

7. Mitläuferband nach einem der Ansprüche 1 bis 6,
dadurch **gekennzeichnet,**
daß die Stärke des Bandes (10) in Querrichtung ungleichmäßig verteilt ist, insbes. an den Rändern stärker oder dünner als im Mittelbereich ist.

8. Mitläuferband nach einem der Ansprüche 1 bis 6,
dadurch **gekennzeichnet,**
daß die Stärke des Bandes (10) in Längsrichtung wechselt.

9. Mitläuferband nach einem der Ansprüche 1 bis 8,
dadurch **gekennzeichnet,**
daß die Beschichtung (16) des Bandes (10) in Längs- oder Querrichtung unterschiedlich stark ausgebildet ist, um dem Band ein angepaßtes Profil zu geben.

10. Mitläuferband nach einem der Ansprüche 1 bis 9,
dadurch **gekennzeichnet,**
daß eine Komponente der Fäden zur Verbesserung der Ableitfähigkeit elektrischer Ladungen aus einem leitenden Werkstoff besteht.